# EUROPÄISCHE PATENTSCHRIFT

(11) **EP 1 536 247 B1**
(45) Veröffentlichungstag und Bekanntmachung des Hinweises auf die Patenterteilung: **11.06.2008**
(21) Anmeldenummer: 04027663.6
(22) Anmeldetag: 22.11.2004
(51) Int. Cl.: G01S 13/90

(54) **Interferometrisches Mikrowellen-Radarverfahren**
Interferometric microwave radar method
Procédé interférométrique de radar à micro-ondes

(30) Priorität: 28.11.2003 DE 10356351
(43) Veröffentlichungstag der Anmeldung: 01.06.2005
(73) Patentinhaber: Deutsches Zentrum für Luft- und Raumfahrt e.V., 51147 Köln (DE)
(72) Erfinder: Eineder, Michael, 81377 München (DE)
(74) Vertreter: von Kirschbaum, Albrecht

(56) Entgegenhaltungen:
- US-A- 4 630 051
- ROSEN P A ET AL: "Synthetic aperture radar interferometry" PROCEEDINGS OF THE IEEE IEEE USA, Bd. 88, Nr. 3, März 2000 (2000-03), Seiten 333-382, XP002320290 ISSN: 0018-9219
- SCHMITT K ET AL: "An interferometric SAR processor avoiding phase ambiguities" GEOSCIENCE AND REMOTE SENSING, 1997. IGARSS '97. REMOTE SENSING - A SCIENTIFIC VISION FOR SUSTAINABLE DEVELOPMENT., 1997 IEEE INTERNATIONAL SINGAPORE 3-8 AUG. 1997, NEW YORK, NY, USA,IEEE, US, Bd. 4, 3. August 1997 (1997-08-03), Seiten 1713-1715, XP010234558 ISBN: 0-7803-3836-7
- L¹O THOUREL: "Initiation aux techniques modernes des radars" 1982, CEPADUES - EDITIONS , TOULOUSE , XP002320293 * Seite 85 - Seite 86 *
- VENEZIANI N ET AL: "A wide-band approach to the absolute phase retrieval in SAR interferometry" MULTIDIMENSIONAL SYSTEMS AND SIGNAL PROCESSING KLUWER ACADEMIC PUBLISHERS NETHERLANDS, Bd. 14, Nr. 1-3, Juli 2003 (2003-07), Seiten 183-205, XP002320291 ISSN: 0923-6082
- MADSEN S N: "On absolute phase determination techniques in SAR interferometry" PROCEEDINGS OF THE SPIE - THE INTERNATIONAL SOCIETY FOR OPTICAL ENGINEERING SPIE-INT. SOC. OPT. ENG USA, Bd. 2487, 21. April 1995 (1995-04-21), Seiten 393-401, XP002320292 ISSN: 0277-786X
- ENGEN G ET AL: "New approach for snow water equivalent (SWE) estimation using repeat pass interferometric SAR" IGARSS 2003. IEEE 2003 INTERNATIONAL GEOSCIENCE AND REMOTE SENSING SYMPOSIUM. PROCEEDINGS. TOULOUSE, FRANCE, JULY 21 - 25, 2003, IEEE INTERNATIONAL GEOSCIENCE AND REMOTE SENSING SYMPOSIUM, NEW YORK, NY : IEEE, US, Bd. VOL 7 OF 7, 21. Juli 2003 (2003-07-21), Seiten 857-859, XP010704097 ISBN: 0-7803-7929-2

## Beschreibung

Die Erfindung betrifft ein interferometrisches Mikrowellen-Radarverfahren mit synthetischer Apertur (SAR), bei dem bei einer Phasendifferenzauswertung, die nach einer kohärenten Demodulation der in zwei unterschiedlichen Positionen empfangenen Echosignale eines Pulsradar-Sendesignals vorgenommen wird, möglicherweise auftretende Phasenmehrdeutigkeiten durch Phase-Unwrapping in Form einer Auswertung zweier in unterschiedlichen Wellenlängenbereichen gebildeter Interferogramme aufgelöst werden, aus denen ein sogenanntes Delta-k-Interferogramm mit wesentlich größerer Wellenlänge gewonnen wird, welches ohne weiteres Unwrapping als Schätzwert für die absolute Phase dient und damit als absoluter Entfernungsmesswert für Bildpunkte herangezogen wird, wozu das Empfangssignalspektrum in zwei jeweils einen der beiden unterschiedlichen Wellenlängenbereiche enthaltende Teilbänder aufgeteilt wird und die in diesen beiden Teilbändern anfallenden Interferogramme zum Delta-k-Interferogramm verrechnet werden, wobei sendeseitig bei der Bildung des Pulsradar-Sendesignals zwei getrennte Radar-Sendepulsfolgen erzeugt werden, die innerhalb eines festgelegten Bandbreitenbereiches in getrennten unterschiedlichen Wellenlängenbereichen betrieben werden und somit zusammen eine Zweiwellenlängenpulsfolge bilden.

Bei der Radarinterferometrie wird die Phase ausgewertet, welche bei der kohärenten Demodulation des Empfangssignals in einem Radarsystem anfällt. Da die Entfernungsauflösung eines Mikrowellenradars viel gröber als die Wellenlänge ist, liefert diese Phase zwar eine sehr genaue relative Entfernungsmessung zwischen benachbarten Bildpunkten, aber keine absoluten Messwerte für einen Bildpunkt. Zudem liegt die Phasenmessung prinzipiell nur zwischen -180° und +180° vor, ist also mehrdeutig.

Unter dieser Mehrdeutigkeit leiden bisher alle praktischen Anwendungen der Radarinterferometrie, z.B. die Erzeugung digitaler Geländemodelle, die Vermessung von geologischen Deformationen oder die Vermessung von Fahrzeuggeschwindigkeiten.

Für einen Großteil der Anwendungen wird zunächst diese Mehrdeutigkeit aufgelöst, indem die Phase durch Auswertung der Gradienten zu den benachbarten Bildpunkten abgewickelt (Phase-Unwrapping) wird.

Bei den allermeisten der bekannten Verfahren zum Phase-Unwrapping wird versucht, alleine aus den mehrdeutigen Messwerten eine konsistente und richtige Lösung zu erzielen. Auf diese Weise kann grundsätzlich keine physikalisch eindeutig korrekte Lösung konstruiert werden. Der Grund dafür besteht darin, dass verschiedene physikalische Konstellationen zu gleichen Messwerten führen können. Die Erfahrung zeigt, dass solche schwierigen Konstellationen nicht nur in der Theorie, sondern auch häufig in der Natur auftreten.

Die einzige Alternative besteht nun darin, externes Vorwissen beim Prozess des Phase-Unwrappings zu berücksichtigen. Dazu muss die Messgröße mit der Genauigkeit der Wellenlänge λ vorher bekannt sein. Das ist allerdings nur sehr selten der Fall.

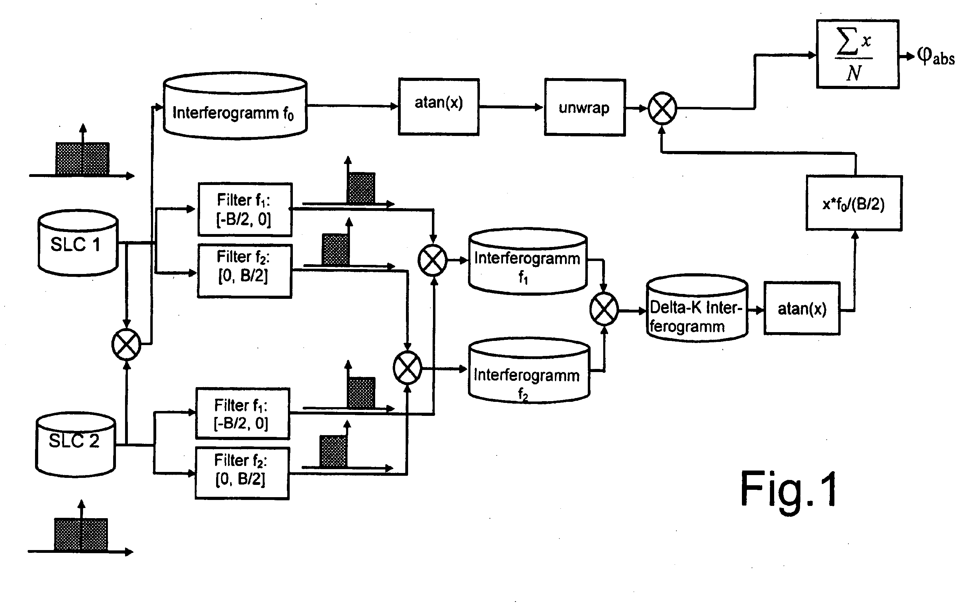

Eine Möglichkeit, um wenigstens den konstanten Phasenoffset des gesamten Bildes zu ermitteln, ist in dem Artikel von S.N. Madsen: "On absolute phase determination techniques in SAR interferometry", SPIE Conference on Radar Sensor Technology, 19.-21. April 1995, Seiten 393-401 veröffentlicht. Um den absoluten Abstand zwischen dem Radarsensor und einem zurückstreuendem Objekt mit der Genauigkeit der Wellenlänge zu berechnen, werden die minimal unterschiedlichen Wellenlängen innerhalb des Radarfrequenzspektrums genutzt. Wie in Fig.1 dargestellt ist, wird dazu je ein Interferogramm aus dem oberen und unteren Seitenband gebildet. Aus diesen beiden Interferogrammen f₁ und f₂ wird ein sogenanntes Delta-k-Interferogramm erzeugt. Dieses entspricht einem Interferogramm mit der wesentlich größeren Wellenlänge 1/(1/λ₁-1/λ₂), welches ohne weiteres Phase-Unwrapping in weiten Bereichen als Schätzwert für die absolute Phase dienen kann. Es wird dazu mit dem Verhältnis aus der Trägerfrequenz f₀ und dem Abstand der Frequenzbänder B/2 skaliert. Dieses Verhältnis ist bei heutigen Radarsensoren eine sehr große Zahl zwischen 1000 und 3000; deshalb ist auch der Schätzfehler entsprechend groß. Wegen des großen Fehlers wird von diesem Schätzwert zunächst die relative "unwrapped" Phase aus dem Interferogramm f₀ subtrahiert und die Differenz über das gesamte Bild, d.h. über einige Millionen Bildpunkte, gemittelt.

In dem Artikel von P. A. Rosen et al.: "Synthetic Aperture Radar Interferometry", Proc. of the IEEE, Band 88, Nr. 3, März 2000 ("000-03), Seiten 333-382, XP002320290 ISSN: 0018-9219 wird insbesondere auf Seite 348 ein SAR-Interferometrieverfahren beschrieben, das dem bereits vorher gewürdigten Verfahren von S.N. Madsen weitgehend gleicht. Danach werden zur Berechnung des absoluten Abstandes zwischen dem Radarsensor und einem zurückstreuenden Objekt mit der Genauigkeit der Wellenlänge die minimal unterschiedlichen Wellenlängen innerhalb des Radarfrequenzspektrums genutzt, wobei dafür ein Interferogramm aus dem oberen Seitenband und ein Interferogramm aus dem unteren Seitenband gebildet werden. Aus diesen beiden Interferogrammen wird dann das sogenannte Delta-k-Interferogramm gebildet, das einem Interferogramm mit wesentlich größerer Wellenlänge entspricht, das ohne weiteres Phase-Unwrapping als Schätzwert für die absolute Phase dient.

Ein Hinweis, dass sich sogar die absolute Phase einzelner Punkte mit diesem bekannten Verfahren ableiten lässt, findet sich in dem Artikel von Engen, G., Guneriussen, T., Overrein O.: "New approach for Snow Water Equivalent (SWE) estimation using repeat pass interferometric SAR", IGARSS 2003.

Aufgrund der kleinen Wellenlängenunterschiede ist dieses bekannte interferometrische Verfahren allerdings sehr störanfällig, wird in der Literatur selten erwähnt und in der Praxis auch kaum angewendet.

Die bisher bekannten Verfahren zum Phase-Unwrapping beim interferometrischen Radar sind also nicht verlässlich und im allgemeinen kann auch kein Fehlermaß angegeben werden. Obwohl der Messwert im Interferogramm millimetergenau ist, kann der zutreffende wahre Wert um Vielfache der Wellenlänge, also Zentimeter oder auch viele Meter entfernt sein.

Die Verwendung der Delta-k-Interferometrietechnik zum Phase-Unwrapping ist demnach bisher an der mangelnden Genauigkeit gescheitert. Diese Technik wurde bisher nur zur Ermittlung des konstanten absoluten Phasenoffset-Wert des gesamten Bildes (Madsen) sowie der absoluten Phase einzelner sehr starker einzelner Punktstreuer (G. Engen et al.) erwähnt.

Im Artikel von K. Schmitt et al.: "An Interferometric SAR Processor Avoiding Phase Ambiguities", Geoscience and Remote Sensing, 1997, IGARSS '97, Remote Sensing - A Scientific Vision for Sustainable Development, 1997 IEEE International Singapore, 3.-8. Aug. 1997, New York, USA, IEEE, US, Band 4, 3. August 1997 (1997-08-03), Seiten 1713-1715, XP010234558 ISBN: 0-7803-3836-7 ist ein labormäßig untersuchtes SAR-Interferometrieverfahren beschrieben, das zur Unterdrückung von Phasenmehrdeutigkeiten mit zwei Frequenzen betrieben wird. Die interferometrische Messung kann auf einer dieser beiden benachbarten Frequenzen ausgeführt werden und außerdem wird die Differenzfrequenz dieser beiden Frequenzen interferometrisch ausgewertet. Bei der interferometrischen Phasenmessung mit jeder der beiden Frequenzen entstehen für die Weglängendifferenz unerwünschte Mehrdeutigkeiten auf Grund der 2π-Phasensprünge. Bei Betrieb mit der Differenzfrequenz ergibt sich bei der interferometrischen Phasenmessung demgegenüber ein größerer Eindeutigkeitsbereich für die Differenz der Weglängen. Das Differenzfrequenz-Interferogramm wird demnach zum Auflösen der Mehrdeutigkeiten verwendet, wogegen das Interferogramm der höheren der beiden Frequenzen zur Erlangung der höchsten Auflösung benutzt wird.

Der Erfindung liegt nunmehr die Aufgabe zu Grunde, eine ohne großen zusätzlichen technischen Aufwand durchführbare Möglichkeit zur verlässlichen und fehlerfreien Auflösung der Phasenmehrdeutigkeiten bei interferometrischen Radarverfahren über jeden einzelnen Bildpunkt eines Bildes zutreffend anzugeben.

Gemäß der Erfindung, die sich auf ein Verfahren der eingangs genannten Art bezieht, wird diese Aufgabe in vorteilhafter Weise dadurch gelöst, dass die Einzelimpulse der beiden in getrennten unterschiedlichen Wellenlängenbereichen betriebenen Radar-Sendepulsfolgen stets gleichzeitig parallel ausgestrahlt werden und dass bei der Erzeugung dieser beiden parallelen Radar-Sendepulspulsfolgen das sendeseitige Trägersignal pro Einzelimpuls mit einem über die Impulsdauer linear frequenzmmodulierten Zweifrequenz-Chirp moduliert wird.

Bei der Erfindung handelt es sich somit um eine gezielte Optimierung eines interferometrischen Radarverfahrens für Delta-k-Interferometrie. Der zur Realisierung nötige technische Aufwand ist nicht allzu hoch und lässt sich leicht in interferometrischen Radarsensoren ergänzen.

Vorteilhafte Weiterbildungen des Verfahrens nach der Erfindung sind in den unmittelbar oder mittelbar auf den Patentanspruch 1 rückbezogenen Unteransprüchenangegeben. Im Anspruch 4 ist eine vorteilhafte Vorrichtung zur Durchführung des interferometrischen Mikrowellen-Radarverfahrens nach der vorliegenden Erfindung angegeben.

Das Verfahren nach der Erfindung wird nachfolgend anhand von Zeichnungen erläutert. Es zeigen:
- Fig.1: das Blockschaltbildes einer Anordnung zur Durchführung des aus dem vorher erwähnten Artikel von S.N. Madsen bekannten interferometrischen Radarverfahren mit Delta-k-Interferometrie;
- Fig.2: in einem zeitabhängigen Diagramm das Frequenzspektrum eines parallelen Zweifrequenzpulses für die verbesserte Delta-k-Interferometrie gemäß dem Verfahren nach der Erfindung;
- Fig.3: ebenfalls in einem zeitabhängigen Diagramm das Frequenzspektrum eines sequentiellen Zweifrequenzpulses für die verbesserte Delta-k-Interferometrie gemäß dem Verfahren nach der Erfindung;
- Fig.4: ein skizzenhaftes Blockschaltbild eines interferometrischen Radarsystems zur Durchführung des Verfahrens nach der Erfindung mit SAR-Prozessor, wobei die durch die Erfindung entstandenen Optimierungen für die Delta-k-Interferometrie grau hinterlegt sind;
- Fig.5: das Empfangsspektrum des Radarsignals mit jeweils 1/6 der Gesamtbandbreite in den Teilbändern;
- Fig.6: das Empfangsspektrum des Radarsignals nach Dezimierung um den Faktor 3, wobei die Wiederholspektren in dunkelgrau dargestellt sind, und
- Fig.7: in einem Blockschaltbild eine Schaltung zur Durchführung der Verarbeitung der interferometrischen Radardaten beim Verfahren nach der Erfindung, wobei die Phasenkonstante n aus der interferometrischen Delta-k-Verarbeitung abgeleitet wird.

Beim interferometrischen Radarverfahren nach der Erfindung wird der herkömmliche Radarsender zu einem Zweifrequenzsender modifiziert. Dies lässt sich dadurch erreichen, dass das Trägersignal mit einem Zweifrequenzchirp moduliert wird. Gegenüber dem eingangs erläuterten Stand der Technik wird durch diese Maßnahme bei gleicher Kanalbandbreite ein wesentlich größerer Abstand der Frequenzkanäle erreicht und damit die Genauigkeit des Delta-k-Interferometrieverfahrens wesentlich gesteigert. Durch die Konzentration der Sendeleistung auf schmälere Bandbreite wird das Signal-Rausch-Verhältnis verbessert.

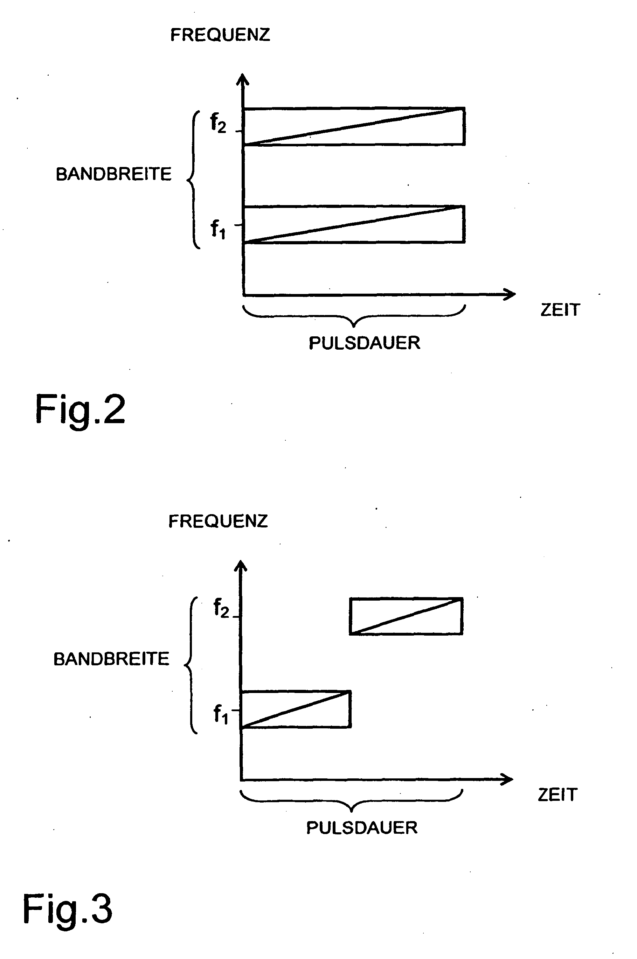

Fig.2 zeigt in Abhängigkeit von der Zeit das Frequenzspektrum eines parallelen, d.h. mit seinen Einzelimpulsen gleichzeitig vorliegenden Zweifrequenzpulses, der vom Radarsender ausgesendet wird. Für jeden Einzelimpuls der beiden Parallelpulsfolgen wird über seine Impulsdauer zum Beispiel ein linear modulierter Chirp verwendet. Beim einen Einzelimpuls bewegt sich die Frequenz während der Impulsdauer linear ansteigend um die Frequenz f₁ und beim andern Impuls linear ansteigend um die höhere Frequenz f₂.

Es können auch größere Frequenzunterschiede realisiert werden, solange die gemeinsam verwendeten Baugruppen dies zulassen. So können zum Beispiel gemeinsame Reflektorantennen verwendet werden, die mit Hörnern in verschiedenen Frequenzbändern beispielsweise X-Band und Ku-Band angesteuert werden.

Ebenso können die beiden Einzelimpulse der beiden Pulsfolgen hintereinander, d.h. zeitlich aufeinanderfolgend, gesendet werden, wie in der zeitabhängigen Frequenzspektrumsdarstellung von Fig.3 gezeigt ist.

Der herkömmliche Radarempfänger wird bei Anwendung des interferometrischen Radarverfahrens nach der Erfindung zu einem Zweifrequenzempfänger mit gemeinsamer Analog-Digital-Wandlung und nachfolgender Unterabtastung modifiziert.

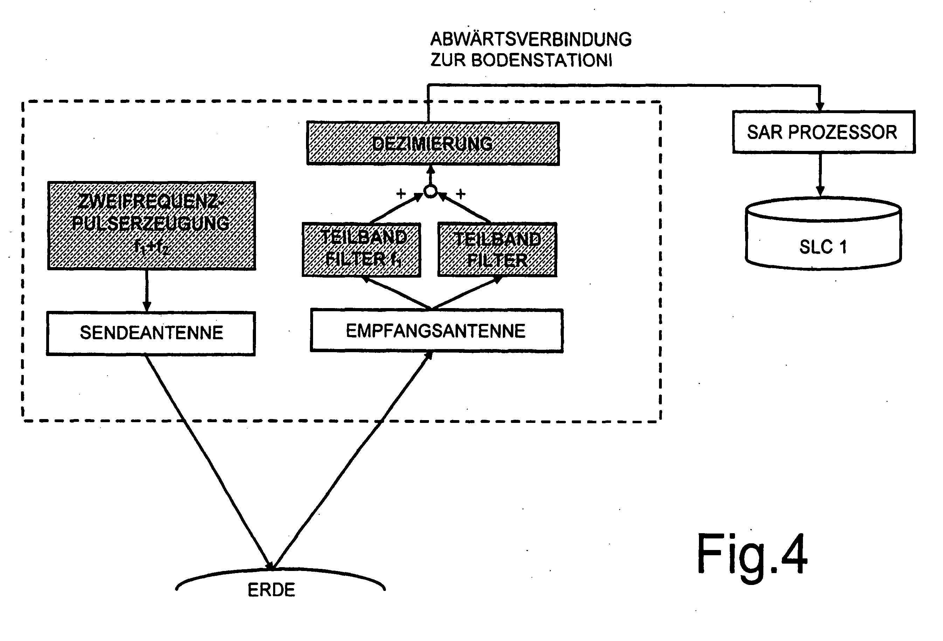

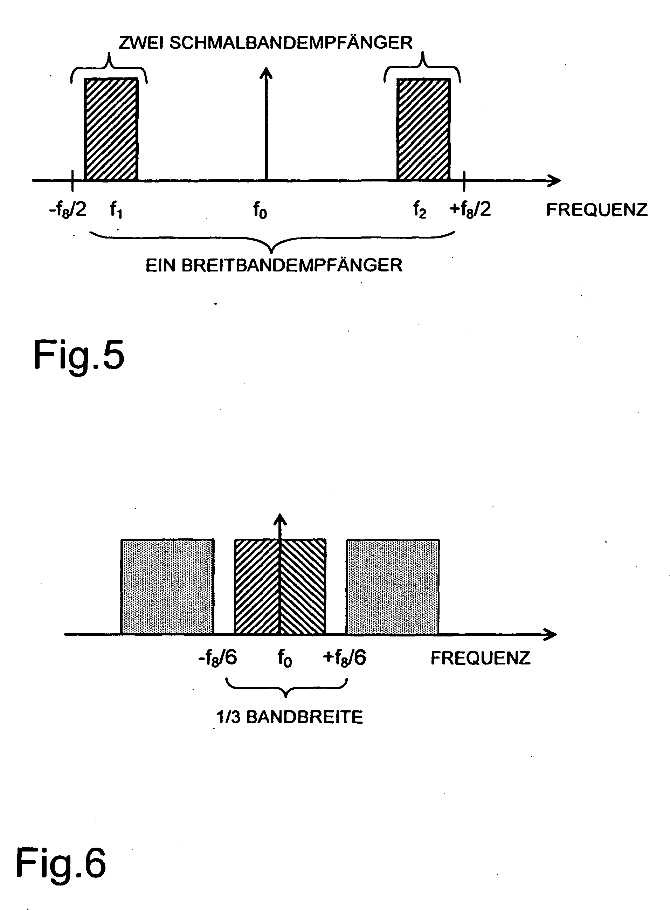

Fig.4 zeigt in einem schematischen Blockschaltbild ein mit synthetischer Apertur arbeitendes Radarsystem (SAR) zur Durchführung des Verfahrens nach der Erfindung mit den für die verbesserte Delta-k-Interferometrie modifizierten Baugruppen, die grau hinterlegt sind. Fig.5 zeigt dazu das Spektrum des empfangenen Radarsignals.

Die Verwendung von zwei getrennten Teilband-Filtern im Empfänger sorgt für einen verbesserten Signal-Rauschabstand im Vergleich zur Verwendung eines breitbandigen Filters, das beim Stand der Technik eingesetzt wird, falls eine Dezimierung bei der Analog-Digital-Wandlung der Interferometriesignale erfolgt. Eine Dezimierung auf die effektiv genutzte Bandbreite der Kanäle ist möglich, wenn die Breite und der Abstand der Kanäle sowie das Dezimierungsverhältnis geeignet gewählt werden.

Fig.6 zeigt in diesem Zusammenhang, dass das Signal eines breitbandigen Empfängers, aber auch die Summe von zwei Schmalbandempfängern um einen Faktor 3 dezimiert werden kann, ohne dass sich die Wiederholspektren (dunkelgrau dargestellt) überlappen. Diese Dezimierung ist ein großer Vorteil gegenüber dem vorher erwähnten Stand der Delta-k-Interferometrietechnik, da bei gleicher Gesamtbandbreite die Datenrate auf einen Bruchteil gesenkt wird. Diese Datenreduktion ist vor allem bei der Anwendung der Radarinterferometrie in Satellitensystemen sehr wichtig.

Falls verschiedene Frequenzbänder mit einem Unterschied von mehr als einigen hundert Megahertz verwendet werden, sind die Empfänger getrennt aufgebaut und es ist vorteilhaft, die Analogdaten getrennt abzutasten. Die Mischung der beiden Kanäle geschieht in diesem Fall digital während der Aufzeichnung des Datenstroms. Hierdurch wird die Signalqualität erhöht und die Trennung der Frequenzkanäle bei der Verarbeitung erleichtert.

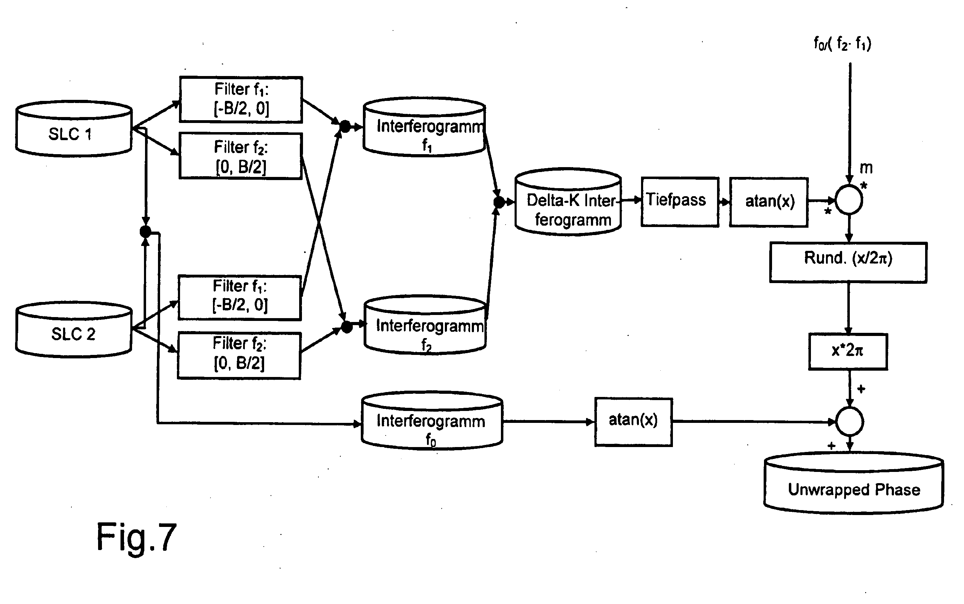

Die Verarbeitung der Daten ist in Fig.7 in einem Blockschaltbild dargestellt und folgt im wesentlichen den bekannten Methoden. Das auch schon in Fig.1 verwendete SLC (SLC 1 und SLC 2) bedeutet wie schon in Fig.4 auch hier "Single Look Complex Image", also das gebräuchliche fokussierte Bildprodukt in komplexer Darstellung. Die Ableitung der Phasenkonstante n aus der interferometrischen Delta-k-Verarbeitung ist aus Gründen einer besseren Verständlichkeit hier nur unfertig und vereinfacht angegeben und in einer dann tatsächlich realisierten Ausführung etwas komplizierter.

Für das verbesserte interferometrische Radarverfahren nach der Erfindung existiert eine ganze Reihe von Anwendungen mit erheblichem Potential hinsichtlich Vermarktung und wissenschaftlicher Bedeutung.

So lassen sich damit aus dem Weltraum heraus durch Satelliten hochgenaue digitale Höhenmodelle auch von schwierigen gebirgigen Gebieten erzeugen, in denen die Phasenmehrdeutigkeit bisher nicht aufgelöst werden konnte.

Es lässt sich damit auch eine Messung der Geschwindigkeit von Straßenverkehr, Gletschern und Meeresströmungen aus dem Weltraum erreichen. Besonders bei einzelnen Fahrzeugen können durch die Anwendung des interferometrischen Radarverfahrens nach der Erfindung auch höhere Geschwindigkeiten außerhalb des Mehrdeutigkeitsintervalls aufgelöst werden.

Es wird an dieser Stelle noch angemerkt, dass das beschriebene Verfahren nach der Erfindung außer auf Satelliten vorteilhaft auch in Flugzeugen angewandt werden kann.

## Patentansprüche

1. Interferometrisches Mikrowellen-Radarverfahren mit synthetischer Apertur (SAR), bei dem bei einer Phasendifferenzauswertung, die nach einer kohärenten Demodulation der in zwei unterschiedlichen Positionen empfangenen Echosignale eines Pulsradar-Sendesignals vorgenommen wird, möglicherweise auftretende Phasenmehrdeutigkeiten durch Phase-Unwrapping in Form einer Auswertung zweier in unterschiedlichen Wellenlängenbereichen gebildeter Interferogramme aufgelöst werden, aus denen ein sogenanntes Delta-k-Interferogramm mit wesentlich größerer Wellenlänge gewonnen wird, welches ohne weiteres Unwrapping als Schätzwert für die absolute Phase dient und damit als absoluter Entfernungsmesswert für Bildpunkte herangezogen wird, wozu das Empfangssignalspektrum in zwei jeweils einen der beiden unterschiedlichen Wellenlängenbereiche enthaltende Teilbänder aufgeteilt wird und die in diesen beiden Teilbändern anfallenden Interferogramme zum Delta-k-Interferogramm verrechnet werden, wobei sendeseitig bei der Bildung des Pulsradar-Sendesignals zwei getrennte Radar-Sendepulsfolgen erzeugt werden, die innerhalb eines festgelegten Bandbreitenbereiches in getrennten unterschiedlichen Wellenlängenbereichen betrieben werden und somit zusammen eine Zweiwellenlängenpulsfolge bilden, **dadurch gekennzeichnet, dass** die Einzelimpulse der beiden in getrennten unterschiedlichen Wellenlängenbereichen betriebenen Radar-Sendepulsfolgen stets gleichzeitig parallel ausgestrahlt werden und dass bei der Erzeugung dieser beiden parallelen Radar-Sendepulspulsfolgen das sendeseitige Trägersignal pro Einzelimpuls mit einem über die Impulsdauer linear frequenzmodulierten Zweifrequenz-Chirp moduliert wird.

2. Interferometrisches Mikrowellen-Radarverfahren nach Anspruch 1, **gekennzeichnet durch** eine Datenreduktion in den Teilbändern **durch** Dezimierung der Empfangssignale einer im Rahmen der Interferogramm-Datenverarbeitung vorgenommenen Analog/Digital-Wandlung.

3. Interferometrisches Mikrowellen-Radarverfahren nach Anspruch 2, gekennzeichet durch eine empfangsseitige Signalausfilterung der beiden jeweils einen der beiden unterschiedlichen Wellenlängenbereiche enthaltenden Teilbänder mittels zweier getrennter Filter.

4. Vorrichtung zur Durchführung des interferometrischen Mikrowellen-Radarverfahrens nach einem der vorhergehenden Ansprüche, **dadurch gekennzeichnet, dass** zur Realisierung der beiden Wellenlängenbereiche getrennte Mikrowellen-Baugruppen vorgesehen sind, welche die Sende- und/oder Empfangsantennen gemeinsam nutzen.

## Claims

1. An interferometric microwave radar method with a synthetic aperture (SAR), wherein, upon a phase difference evaluation performed after a coherent demodulation of echo signals of a pulsed radar transmission signal, said echo signals being received at two different positions, possibly occurring phase ambiguities are solved by phase unwrapping in the form of an evaluation of two interferograms formed in different wavelength regions, from which a so-called delta-k-interferogram of a much greater wavelength is obtained, which, without any further unwrapping, serves as an estimate of the absolute phase and is thus used as an absolute measured value of distance for image elements, the spectrum of the received signal therefore being split into two sub-bands, each including a respective one of the two different wavelength ranges, and the interferograms occurring in those two sub-bands being calculated to obtain said delta-k-interferogram, two separate radar transmission pulse trains being generated on the transmission side when forming the pulsed radar transmission signal, said- radar pulse transmission trains being driven in separate different wavelength ranges within a predetermined band width range and thus together form a dual-wavelength pulse train, **characterized in that** the single pulses of the two radar transmission pulse trains driven in separate different wavelength ranges are always emitted simultaneously and in parallel, and that upon generating those two parallel individual radar transmission pulse trains, the transmission-side carrier signal is modulated, for each single pulse, with a dual frequency chirp linearly frequency modulated for the duration of a pulse.

2. The interferometric microwave radar method of claim 1, **characterized by** a data reduction in the sub-bands obtained by decimating the received signals from an A/D conversion performed in the process of the interferogram data processing.

3. The interferometric microwave radar method of claim 2, **characterized by** using two separate filters on the receiving side for a signal filtering of the two sub-bands, each comprising a respective one of the two different wavelength ranges.

4. A device for performing the interferometric microwave radar method of one of the preceding claims, **characterized in that** separate microwave assemblies are provided to realize the two wavelength ranges, said assemblies sharing the transmission and/or receiving antennas.

## Revendications

1. Procédé de radar à micro-ondes interférométrique avec une ouverture synthétique (SAR), dans lequel, pour une évaluation de différence de phase qui est réalisée après une démodulation cohérente d'écho-signaux d'un signal d'émission de radar d'impulsions reçu dans deux positions différentes, les ambiguïtés de phase se produisant éventuellement sont résolues par unwrapping (déroulement de) phase sous forme d'évaluation de deux interférogrammes formés dans des zones de longueurs d'ondes différentes, à partir desquelles on obtient un interférogramme qu'il est convenu d'appeler interférogramme Delta-k avec une longueur d'onde sensiblement plus importante qui sert de valeur estimative sans autre unwrapping pour la phase absolue et, par conséquent, peut être utilisé comme valeur de mesure de distance absolue pour des points d'image, pour ce faire le spectre des signaux de réception est divisé en deux bandes partielles contenant respectivement une des deux zones de longueurs d' ondes différentes et les interférogrammes tombant dans ces deux bandes partielles sont pris en compte pour l'interférogramme Delta-k, tandis que côté émission dans la formation du signal d'émission de radar à impulsions, il est produit deux suites d'impulsions d'émission de radar séparées qui, à l'intérieur d'une zone de largeur de bande déterminée, sont exploitées dans des zones de longueurs d'ondes différentes séparées et, par conséquent, forment conjointement une série d'impulsions à deux longueurs d'ondes, **caractérisé en ce que** les impulsions individuelles des deux séquences d'impulsions d'émission de radar exploitées dans les zones de longueurs d'ondes différentes séparées sont toujours émises simultanément en parallèle, et **en ce que**, pour la production de ces deux séquences d'impulsions d'émission de radar parallèles, le signal porteur côté émission est modulé par impulsions individuelles avec un chirp à deux fréquences modulé en fréquence linéairement pendant la durée d'impulsion.

2. Procédé de radar à micro-ondes interférométrique selon la revendication 1, **caractérisé par** une réduction de données dans les bandes partielles par décimation des signaux de réception d'une transformation analogique/numérique réalisée dans le cadre du traitement de données par interférogramme.

3. Procédé de radar à micro-ondes interférométrique selon la revendication 2, **caractérisé par** le filtrage de signaux c8té réception des deux bandes partielles contenant respectivement l'une des deux zones de longueurs d'ondes différentes au moyen de deux filtres séparés.

4. Dispositif pour la réalisation du procédé de radar à micro-ondes interférométrique selon l'une des revendications précédentes, **caractérisé en ce que**, pour la réalisation des deux zones de longueurs d'ondes, des modules de micro-ondes séparés sont prévus, lesquels utilisent en commun les antennes émission et/ou réception.
